# EUROPEAN PATENT APPLICATION

(11) **EP 4 539 177 A1**
(43) Date of publication of application: **16.04.2025**
(21) Application number: 22945928.4
(22) Date of filing: 09.06.2022
(51) Int. Cl.: H01M 8/04119

(54) **FUEL CELL MEMBRANE HUMIDIFIER**

(71) Applicant: NVH Korea, Inc., Ulsan 44246 (KR)
(72) Inventor: LEE, Cheol Hee, Ansan-si Gyeonggi-do 15454 (KR); RYU, Jong Hyun, Ansan-si Gyeonggi-do 15596 (KR)
(74) Representative: Stöckeler, Ferdinand
(86) International application number: PCT/KR2022/008157
(87) International publication number: WO 2023/238968

(57) **Abstract**

The subject matter disclosed in the present specification relates to a fuel cell membrane humidifier which can maintain a high humidity effect by allowing a high humidity gas discharged from a stack of hydrogen fuel cells to come in contact with the entire upper part, middle part and lower part of a hollow fiber membrane module without a dead zone, and which has improved airtightness and assemblability between a main housing coupled to a cartridge, an inlet housing and an outlet housing, the fuel cell membrane humidifier comprising: the main housing in which a flow-in section forming an inlet part for humid gas discharged from a fuel cell, a flow-out section forming an outlet part for the gas, and at least one cartridge support part formed inside a main body between the inlet part and the outlet part are integrally formed; and a hollow fiber membrane cartridge, which includes at least one outer flange formed to be spaced outside a cartridge housing in correspondence to the cartridge support part, has a plurality of hollow fiber membrane modules arranged inside the cartridge housing, and structurally separates the flow-in section from the flow-out section by means of the flange during assembly inside the main housing, wherein the hollow fiber membrane cartridge comprises: an arrangement of an

## Description

### Technical Field

The present disclosure relates generally to a fuel cell membrane humidifier. More particularly, the present disclosure relates to a fuel cell membrane humidifier that can maintain high humidifying efficiency by enabling high-humidity gas discharged from a stack of a hydrogen fuel cell to make uniform contact with the entire upper, middle, and lower parts of a hollow fiber membrane module without a dead zone, and improve airtightness and assemblability between a main housing coupled to a cartridge, an inlet housing, and an outlet housing.

### Background Art

Unless otherwise indicated herein, the approaches described in this section are not teachings or suggestions of the prior art to the claims in this application and are not admitted to be prior art by inclusion in this section.

In general, hydrogen fuel cells that utilize electricity generated by the reaction between hydrogen fuel and oxygen are being developed in various types, such as a polymer electrolyte membrane fuel cell (PEMFC), a phosphoric acid fuel cell (PAFC), and a dual exchange membrane fuel cell.

Polymer electrolyte membrane fuel cells are known to be promising for use in not only small-scale stationary power generation equipment but also transportation equipment such as hydrogen vehicles because they operate at lower temperatures than other fuel cells and can be miniaturized due to their high output density.

One of the key factors in improving the performance of such polymer electrolyte membrane fuel cells is to maintain the moisture content by supplying a predetermined amount or more of moisture to a polymer electrolyte membrane (PEM, also called proton exchange membrane) of a membrane electrode assembly (MEA) provided inside a fuel cell stack. This is because the power generation efficiency rapidly decreases when the polymer electrolyte membrane dries.

Since the performance of the fuel cell is greatly affected by the moisture content of gas supplied to the stack, membrane humidification technology is regarded very important in maintaining the moisture content or humidity of the supplied gas at a required level through humidification of the gas.

As one of the conventional techniques in this regard, a membrane humidifier for a fuel cell using a humidification system using a hollow fiber membrane is disclosed in Korean Patent Application Publication No. 10-2019-0138529.

The above-described conventional membrane humidifier for the fuel cell is configured to include a middle casing in which a plurality of hollow fiber membranes are accommodated; a cap casing coupled to the middle casing; a potting portion formed at an end of the plurality of hollow fiber membranes; an assembly member disposed between the cap casing and an end of the middle casing to hermetically connect the cap casing and the middle casing to each other; and a protrusion extending from the inside of the cap casing toward an edge of the potting portion to hermetically connect the cap casing and the potting portion to each other.

The membrane humidifier for the fuel cell has an assembly structure in which the assembly member is disposed between the cap casing and the end of the middle casing and the protrusion between the cap casing and the potting portion extends from the inside of the cap casing toward the edge of the potting portion, so an airtight function can be achieved in a high temperature/high pressure/high humidity environment.

Despite these advantages, the conventional membrane humidifier described above is problematic in that contact between gas introduced from a stack and the hollow fiber membranes is concentrated on an inlet side of the middle casing, forming a dead zone at the bottom of the middle casing, and the humidifying efficiency of the introduced gas in the dead zone becomes poor, thereby worsening the overall humidifying efficiency.

Meanwhile, since airtightness between housings and a cartridge that constitute the membrane humidifier and assemblability therebetween are very important factors for improving the productivity and humidifying efficiency for manufacturing the membrane humidifier, various research and development attempts concerning this are being carried out.

### Disclosure

### Technical Problem

One objective of the present disclosure is to provide a fuel cell membrane humidifier that enables a high-humidity gas discharged from a stack of a hydrogen fuel cell to form a contact path with the entire upper, middle, and lower parts of a hollow fiber membrane module without a dead zone within a main housing, and sufficiently humidifies air supplied to the stack.

Another objective of the present disclosure is to provide a fuel cell membrane humidifier having a structure advantageous in airtightness and assemblability between housings and a cartridge for the membrane humidifier for productivity and humidifying efficiency in manufacturing the membrane humidifier.

### Technical Solution

According to one aspect of the present disclosure,
there is provided a fuel cell membrane humidifier, including: a main housing in which a flow-in section forming an inlet portion for humid gas discharged from a fuel cell, a flow-out section forming an outlet portion for the humid gas, and at least one or more cartridge support portions formed inside a main body between the inlet portion and the outlet portion are integrally formed; and
a hollow fiber membrane cartridge including at least one or more outer flanges formed to be spaced apart from each other on an outside of a cartridge housing corresponding to the cartridge support portions, having a plurality of hollow fiber membrane modules arranged inside the cartridge housing, and structurally separating the flow-in section from the flow-out section by the flanges during assembly inside the main housing.

The hollow fiber membrane cartridge may include:
a distribution port array including an upstream distribution port, a midstream distribution port, and a downstream distribution port formed on a first sidewall of the cartridge housing; and
a discharge port array including an upstream discharge port, a midstream discharge port, and a downstream discharge port formed on a second sidewall of the cartridge housing.

The distribution ports may be formed in a multi-layer array so that an opening area thereof gradually increases from upstream to downstream, and
the discharge ports may be formed in a multi-layer array so that an opening area thereof gradually increases from downstream to upstream.

According to another aspect of the present disclosure, a middle seal may be coupled to an outside of the second outer flange of the cartridge, and airtightness of the support portions of the main housing may be maintained by the middle seal.

According to another aspect of the present disclosure, a step seal may be provided at an end of each side of the cartridge housing, and airtightness between the outlet housing and the inlet housing may be maintained by the step seal.

According to another aspect of the present disclosure, the distribution port array may include through-holes that increase in opening area the farther they are away from the flow-in section.

According to another aspect of the present disclosure, the discharge port array may include through-holes that decrease in opening area the farther they are away from the flow-out section.

According to another aspect of the present disclosure, the step seal may include one of a V-shaped seal, an O-ring, and a face seal.

According to another aspect of the present disclosure, the fuel cell membrane humidifier may further include: a gasket installed at a first end of the main housing, wherein the gasket provides airtightness to the inlet housing.

According to another aspect of the present disclosure, the fuel cell membrane humidifier may further include: a gasket installed at a second end of the main housing, wherein the gasket provides airtightness to the outlet housing.

### Advantageous Effects

According to one embodiment disclosed in the present specification, humid gas circulates and flows within a hollow fiber membrane module by distribution port and discharge port arrangement structures having different opening areas from the upstream side toward the midstream side and the downstream side of a cartridge, thereby providing maximized humidifying efficiency without a dead zone for dry compressed air passing through the inside of the cartridge and a hollow fiber membrane.

Furthermore, according to one embodiment disclosed in the present specification, a structural isolation state is formed by a second outer flange of the cartridge, so an entering flow of humid gas filled in a flow-in section and a discharge flow of humid gas formed in a flow-out section are stably maintained.

Furthermore, according to one embodiment disclosed in the present specification, structurally simple assembly elements are provided between the cartridge and a main housing as well as an inlet housing and an outlet housing, thereby maintaining strong airtightness after replacement and assembly.

Furthermore, according to one embodiment disclosed in the present specification, separate epoxy potting and drying processes required in case of damage or A/S of the cartridge or hollow fiber membrane module (hollow fiber membrane filter), thereby providing speed in replacement and assembly work and economic efficiency in cost reduction.

The effects of the present disclosure are naturally exhibited from the specification of the present disclosure irrespective of whether the inventors recognize the effects of the present disclosure. Consequently, the effects of the present disclosure are some effects of the present disclosure based on the specification of the present disclosure, and do not include all effects that the inventors have found or that actually exist.

Additionally, the effects of the present disclosure are further recognized through the specification of the present disclosure. Although not described clearly, any effects that can be recognized by those skilled in the art to which the present disclosure pertains from the specification of the present disclosure may be included in the effects of the present disclosure.

### Description of Drawings

FIG. 1 is a sectional view illustrating a fuel cell membrane humidifier according to an embodiment of the present disclosure.
FIG. 2 is an exploded perspective view illustrating a coupling relationship between a cartridge and a seal element according to the embodiment of the present disclosure.
FIG. 3 is view illustrating an operating state of the fuel cell membrane humidifier according to the embodiment of the present disclosure.
FIG. 4 is a main-part enlarged view illustrating a seal coupling state of a main housing, an inlet housing, and an outlet housing according to the embodiment of the present disclosure.
FIG. 5 is a main-part enlarged view illustrating a V-seal as an example of a step seal illustrated in FIG. 4.
FIG. 6 is a main-part enlarged view illustrating an O-ring coupling structure according to another embodiment of the present disclosure.
FIG. 7 is a main-part enlarged view illustrating a face seal coupling structure according to another embodiment of the present disclosure.

### Best Mode

Hereinafter, the configuration, operation, and effects of a fuel cell membrane humidifier according to an exemplary embodiment of the disclosure will be described with reference to the accompanying drawings. For reference, in these drawings, each component is omitted or schematically illustrated for convenience and clarity, and the size of each component does not reflect the actual size. The same reference numerals will refer to the same or like parts throughout the drawings, and reference numerals for the same or like parts in individual drawings will be omitted.

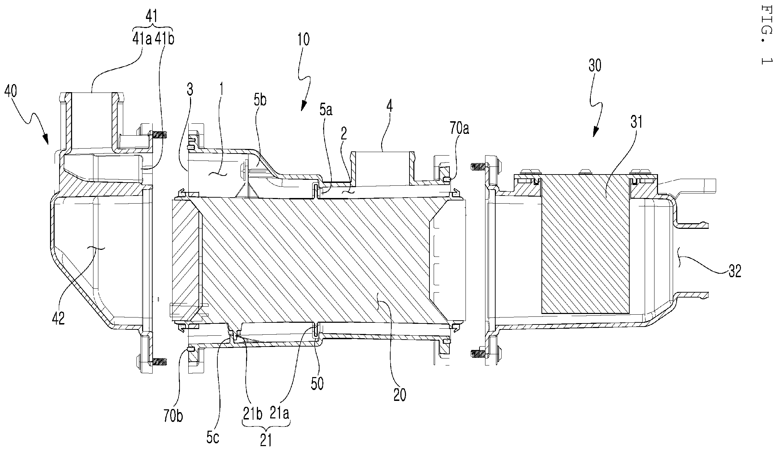

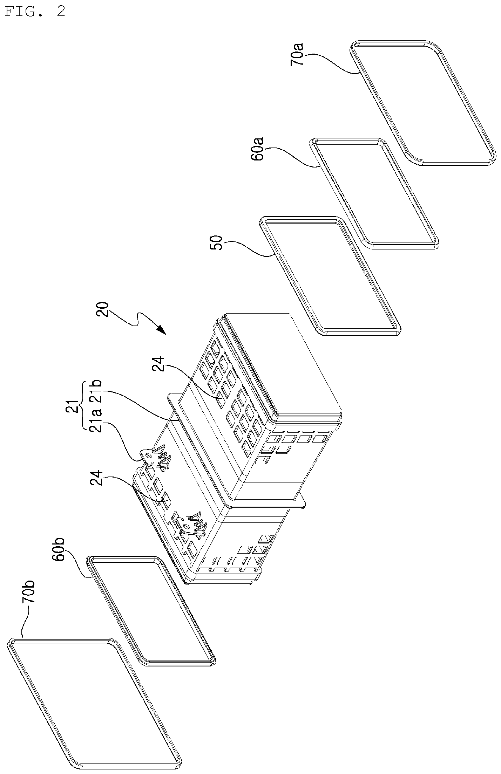

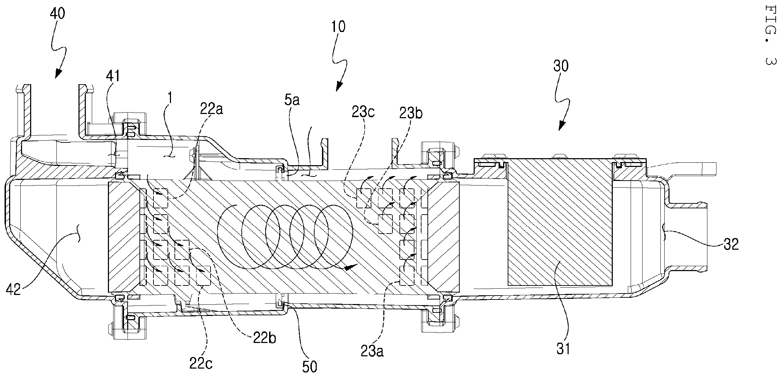

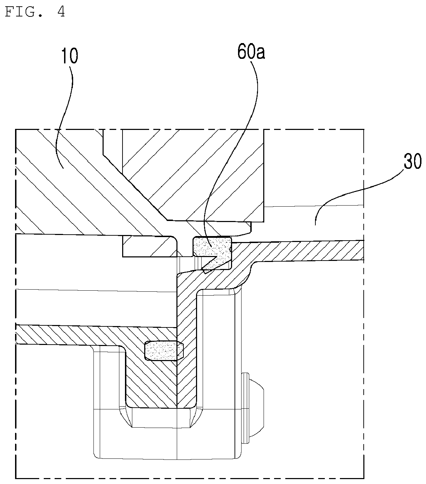

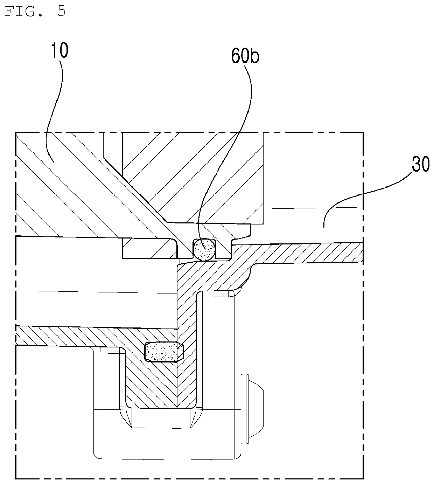

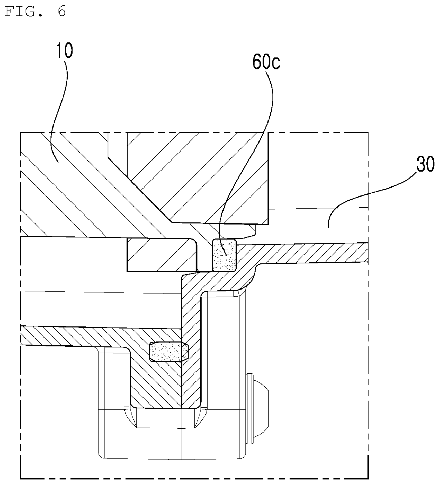

FIG. 1 is a sectional view illustrating a fuel cell membrane humidifier according to an embodiment of the present disclosure. FIG. 2 is an exploded perspective view illustrating a coupling relationship between a cartridge and a seal element according to the embodiment of the present disclosure. FIG. 3 is view illustrating an operating state of the fuel cell membrane humidifier according to the embodiment of the present disclosure. FIG. 4 is a main-part enlarged view illustrating a seal coupling state of a main housing, an inlet housing, and an outlet housing according to the embodiment of the present disclosure. FIG. 5 is a main-part enlarged view illustrating a V-seal as an example of a step seal illustrated in FIG. 4. FIG. 6 is a main-part enlarged view illustrating an O-ring coupling structure according to another embodiment of the present disclosure. FIG. 7 is a main-part enlarged view illustrating a face seal coupling structure according to another embodiment of the present disclosure.

The fuel cell membrane humidifier according to the embodiment of the present disclosure has an assembly structure in which a hollow fiber membrane cartridge 200 is inserted in a sliding manner on an inner surface of a main housing 100 during an assembly process, and flanges are each seated on a support provided inside the main housing 100.

More specifically, referring to FIGS. 1 and 2, the main housing 100 includes a flow-in section 3 forming an inlet portion 1 for humid gas discharged from a fuel cell, a flow-out section 4 forming an outlet portion 2 for the humid gas, and at least one or more cartridge support portions 5 formed inside a main body 10 between the inlet portion 1 and the outlet portion 2. The inlet portion 1, the outlet portion 2, and the cartridge support portions 5 are integrally formed by molding.

The flow-in section 3 forms a flow space where humid gas with high pressure and high humidity or water vapor, which is typically formed in a hydrogen fuel cell, is introduced through the inlet portion 1.

The flow-out section 4 forms a flow space where the humid gas, which circulates inside the cartridge housing 30 to be described later and comes into sufficient contact with hollow fiber membranes, flows to the outside of the cartridge and is discharged.

The cartridge support portions 5 include a first support portion 5a that fixes an upper portion of the cartridge housing 20 by bolting, a second support portion 5b that is formed to be spaced apart from the first support portion 5a toward the longitudinal center and restricts lateral movement of the cartridge housing 30, and a third support portion 5c that fixes a lower portion of the cartridge housing 20 by fitting.

The second support portion 5b includes a step structure protruding toward the inside of the main body 10. The third support portion 5c includes a flange insertion groove 6.

The lateral movement of the cartridge housing 20 described above may be interpreted as a force acting on the cartridge housing 20 by fluid pressure applied to the cartridge housing 20 when high-pressure humid gas flows into the flow-in section 3, and a resulting microscopic movement.

Additionally, the lateral movement of the cartridge housing 20 described above may be interpreted as an external force acting on the cartridge housing 20 in a flow direction formed from the flow-in section 3 to the flow-out section 4 in the absence of the configuration of the support portion 5a, 5b, or 5c.

An inlet housing 30 is connected to the flow-out section 4 of the main housing 100 and guides inflow of relatively dry external air compared to the humid gas.

Generally, external air is supplied into the inlet housing 30 through a compressor, and the external air is introduced in a high-temperature, dry state.

The outlet housing 30 includes a cooler 31 installed therein, and guides the external air into a hollow fiber membrane module inside the cartridge.

The cooler 31 performs the function of maintaining the external air at a preset temperature. At this time, the external air is still in a dry state.

Meanwhile, an outlet housing 40 is connected to the flow-in section 3 of the main housing 100 and includes a humid gas inlet 41 for guiding the humid gas provided from the hydrogen fuel cell and an external air outlet 42 adjacent to the humid gas inlet 41.

The external air outlet 42 of the outlet housing 40 forms a path through which humidified air sufficiently humidified while passing through a membrane region of the hollow fiber membrane module is provided into a stack of the hydrogen fuel cell.

Meanwhile, referring to FIG. 2, the cartridge housing 20 according to the embodiment of the present disclosure includes at least one or more outer flanges 21 formed spaced apart from each other on the outside of the cartridge housing 20 corresponding to the cartridge support portions 5 of the main housing 100. A plurality of hollow fiber membrane modules are arranged inside the cartridge housing 20.

When the cartridge housing is assembled within the main housing 100, the flow-in section 2 and the flow-out section 4 are structurally isolated from each other by the outer flanges 21.

Preferably, the outer flanges 21 include a first outer flange 21a that is bound to the first support portion 5a during assembly and a second outer flange 21b that is bound to the second support portion 5b.

The flow-in section 2 and the flow-out section 4 formed on the outside of the cartridge housing 20 form predetermined chambers that are structurally separated or blocked from each other by the second outer flange 21b that is bound to the second support portion 5b.

In the process of flowing humid air, the humid air of the flow-in section 2 is guided from a first side of the second outer flange 21b and directed to the hollow fiber membranes inside the cartridge housing 20.

On the other hand, the humid air of the flow-out section 2 is guided from a second side of the second outer flange 21b and directed to the outlet portion 2 or a discharge portion.

The hollow fiber membrane cartridge according to the present disclosure includes: a distribution port array 22 including an upstream distribution port 22a, a midstream distribution port 22b, and a downstream distribution port 22c formed on a first sidewall of the cartridge housing 10; and a discharge port array 23 including an upstream discharge port 23a, a midstream discharge port 23b, and a downstream discharge port 23c formed on a second sidewall of the cartridge housing 10.

The distribution ports 22a, 22b, and 22c are formed in a multi-layer array so that the opening area thereof gradually increases from upstream to downstream. For example, as illustrated, the distribution ports may have a through-hole structure in which the number of through-holes gradually increases toward the downstream distribution port 22c from the upstream distribution port 22a.

The distribution port array 22 includes through-holes that increase in opening area the farther they are away from the flow-in section 2.

Although not illustrated, as another modified embodiment, the upstream distribution port 22a, the midstream distribution port 22b, and the downstream distribution port 22c may have through-hole structures having different opening areas, and may have various geometrical variations including circular holes, triangular holes, and rectangular holes.

Meanwhile, the discharge ports 23a, 23b, and 23c are formed in a multi-layer array so that the opening area thereof gradually increases from downstream to upstream. For example, as illustrated, the discharge ports may have a through-hole structure in which the number of through-holes gradually increases toward the upstream discharge port 23a from the downstream discharge port 23c.

The discharge port array 23a, 23b, 23c includes through-holes that decrease in opening area the farther they are away from the flow-out section 4.

Although not illustrated, as another modified embodiment, the upstream discharge port 23a, the midstream discharge port 23b, and the downstream discharge port 23c may have through-hole structures having different opening areas, and may have various geometrical variations including circular holes, triangular holes, and rectangular holes.

Of course, the hollow fiber membrane cartridge described above includes a plurality of through-holes 24 in the upper and lower portions of the cartridge housing 10 so as to communicate with the inside of the hollow fiber membrane cartridge.

Meanwhile, according to the embodiment of the present disclosure, a middle seal is coupled to the outside of the second outer flange 21b of the cartridge housing 20.

Preferably, the middle seal is coupled to the outside of the second outer flange of the cartridge, and airtightness of the support portions of the main housing is maintained by the middle seal.

The second outer flange 21b to which the middle seal 50 is coupled maintains a structurally sufficiently sealed state with respect to the flow-in section 2 and the flow-out section 4 formed on the outside of the cartridge housing 10 during assembly.

A step seal 60 is provided at an end of each side of the cartridge housing 20, and maintains airtightness between the outlet housing 30 and the inlet housing 40 during assembly.

The step seal 60 enables simple seal assembly without the need for separate epoxy potting and drying processes in case of damage or A/S of the cartridge or hollow fiber membrane module (hollow fiber membrane filter), thereby providing speed in replacement and assembly work and economic efficiency in cost reduction.

In detail, the fuel cell membrane humidifier according to the present disclosure configured with the above-described step seal 60 eliminates complex secondary potting and drying processes that were essential for conventional cartridge and hollow fiber membrane filter replacement work, thereby significantly reducing the number of man-hours required for replacement work.

Preferably, as illustrated in FIG. 4, the step seal 60 structurally includes a V-shaped seal or lip seal 60a and is provided at a connecting portion of the cartridge housing 20 on each of first and second sides of the cartridge housing. Accordingly, airtightness between the inlet housing 30 and the outlet housing 40 assembled to opposite sides of the cartridge housing 20 is maintained without separate potting and drying processes.

According to another embodiment of the present disclosure, as illustrated in FIGS. 5 and 6, the step seal 60 may be modified into an O-ring 60b or a face seal 60c. Depending on the seal performance and requirements, one of the V-shaped seal (lip seal), the O-ring, and the face seal may be selectively provided.

Meanwhile, a gasket 70a is formed at a first end of the main housing 10. The gasket 70a provides strong airtightness to the inlet housing 40.

A gasket 70b may be further provided at a second end of the main housing 70. In this case, the gasket 70b provides airtightness to the outlet housing 30.

### Mode for Invention

Hereinafter, the operating principle of the fuel cell membrane humidifier according to the present disclosure will be described.

Referring to FIG. 3, humid gas generated in a hydrogen fuel cell stack is supplied through the humid gas inlet 41 of the outlet housing 40.

The supplied humid gas is first filled into a space between the inside of the main housing 10 and the outer flanges of the cartridge housing 20, for example, the flow-in section 3 of the main housing 10 formed on the outside of the second outer flange 21b.

At this time, a structural isolation state is formed by the second outer flange 21b of the cartridge housing 20, so an entering inflow of the humid gas filled in the flow-in section 3 is stably maintained.

Generally, the humid gas supplied from the hydrogen fuel cell stack is provided in the form of a preset high-pressure steam. Therefore, the humid gas filled in the flow-in section 3 is introduced into the hollow fiber membrane modules through the upstream distribution port 22a, the midstream distribution port 22b, and the downstream distribution port 22c sequentially provided on the first sidewall of the cartridge housing 10.

In this process, the supplied humid gas passes through side inflow paths F1 to F3 formed by the distribution ports of the distribution port array 22 arranged to have an opening area (e.g., through-hole diameter) that gradually increases from the upstream side to the downstream side of the cartridge housing 10, and enters the inside of the hollow fiber membrane modules.

The humid gas entering through the inflow paths F1 to F3 forms predetermined circulating airflow and vortex flow (see spiral arrow in FIG. 3) between upper, middle, and lower regions of the hollow fiber membranes in the cartridge housing 20, and flows toward the discharge ports.

Ultimately, the humid gas passes through the hollow fiber membranes without forming a dead zone at opposite sides of the hollow fiber membranes as well as upper and lower portions thereof in the cartridge housing, and then reaches the flow-out section 4 through the discharge ports 23a, 23b, and 23c arranged to have an opening area (e.g., through-hole diameter) that gradually increases from the downstream side to the upstream side of the cartridge housing 10, and finally exits through the outlet portion 2.

In this process, a structural isolation state is formed by the second outer flange 21b of the cartridge housing 10, so a discharge flow of the humid gas formed in the flow-out section 4 is also stably maintained.

Meanwhile, dry external air introduced from the inlet housing 30 passes through the hollow fiber membranes in a state where moisture of the humid gas has been filtered and is sufficiently humidified without a dead zone. The air sufficiently humidified in this way (meaning humidified compressed air) is provided to the hydrogen fuel cell through the external air outlet 42 of the outlet housing.

As described above, the fuel cell membrane humidifier according to the present disclosure enables the humid gas to make uniform contact with the entire upper, middle, and lower parts of the hollow fiber membrane modules, thereby forming a sufficient humidifying action without a dead zone for dry compressed air entering from the inlet housing, thereby achieving maximized humidifying efficiency.

In describing the present disclosure, a moisture filtration function of the hollow fiber membrane (membrane region) in the above-described process of flowing the humid gas through the circulating airflow or vortex flow is well known, so a detailed description thereof is omitted.

Specific structural and functional descriptions of embodiments of the present disclosure disclosed herein are only for illustrative purposes of the preferred embodiments of the present disclosure, and the present description is not intended to represent all of the technical spirit of the present disclosure. On the contrary, the present disclosure is intended to cover not only the exemplary embodiments, but also various alternatives, modifications, equivalents and other embodiments that may be included within the spirit and scope of the present disclosure as defined by the appended claims. Therefore, the preferred embodiments of the present disclosure should be understood as illustrative and not limiting in all respects. The scope of the present disclosure is defined by the accompanying claims rather than the description which is presented above. Moreover, the scope of the present disclosure should be determined on the basis of the descriptions in the appended claims, not any specific embodiment, and all equivalents thereof should belong to the scope of the present disclosure.

### Industrial Applicability

A fuel cell membrane humidifier according to the present disclosure can maintain high humidifying efficiency by enabling high-humidity gas discharged from a stack of a hydrogen fuel cell to make uniform contact with the entire upper, middle, and lower parts of a hollow fiber membrane module without a dead zone, and improve airtightness and assemblability between a main housing coupled to a cartridge, an inlet housing, and an outlet housing.

## Claims

1. A fuel cell membrane humidifier, comprising:
a main housing in which a flow-in section forming an inlet portion for humid gas discharged from a fuel cell, a flow-out section forming an outlet portion for the humid gas, and at least one or more cartridge support portions formed inside a main body between the inlet portion and the outlet portion are integrally formed; and
a hollow fiber membrane cartridge comprising at least one or more outer flanges formed to be spaced apart from each other on an outside of a cartridge housing corresponding to the cartridge support portions, having a plurality of hollow fiber membrane modules arranged inside the cartridge housing, and structurally separating the flow-in section from the flow-out section by the flanges during assembly inside the main housing,
wherein the hollow fiber membrane cartridge comprises:
a distribution port array comprising an upstream distribution port, a midstream distribution port, and a downstream distribution port formed on a first sidewall of the cartridge housing; and
a discharge port array comprising an upstream discharge port, a midstream discharge port, and a downstream discharge port formed on a second sidewall of the cartridge housing,
wherein the distribution ports are formed in a multi-layer array so that an opening area thereof gradually increases from upstream to downstream, and
the discharge ports are formed in a multi-layer array so that an opening area thereof gradually increases from downstream to upstream.

2. The fuel cell membrane humidifier of claim 1, wherein a middle seal is coupled to an outside of the second outer flange of the cartridge, and airtightness of the support portions of the main housing is maintained by the middle seal.

3. The fuel cell membrane humidifier of claim 1, wherein a step seal is provided at an end of each side of the cartridge housing, and airtightness between the outlet housing and the inlet housing is maintained by the step seal.

4. The fuel cell membrane humidifier of claim 1, wherein the distribution port array comprises through-holes that increase in opening area the farther they are away from the flow-in section.

5. The fuel cell membrane humidifier of claim 1, wherein the discharge port array comprises through-holes that decrease in opening area the farther they are away from the flow-out section.

6. The fuel cell membrane humidifier of claim 3, wherein the step seal comprises one of a V-shaped seal, an O-ring, and a face seal.

7. The fuel cell membrane humidifier of any one of claims 1 to 6, further comprising:
a gasket installed at a first end of the main housing, wherein the gasket provides airtightness to the inlet housing.

8. The fuel cell membrane humidifier of claim 7, further comprising:
a gasket installed at a second end of the main housing, wherein the gasket provides airtightness to the outlet housing. upstream distribution port, a midstream distribution port, and a downstream distribution port formed in one sidewall of the cartridge housing; and an arrangement of an upstream discharge port, a midstream discharge port, and a downstream discharge port formed in the other sidewall of the cartridge housing.
